# EUROPÄISCHE PATENTSCHRIFT

(11) **EP 1 718 998 B1**
(45) Veröffentlichungstag und Bekanntmachung des Hinweises auf die Patenterteilung: **27.07.2016**
(21) Anmeldenummer: 05701523.2
(22) Anmeldetag: 17.01.2005
(51) Int. Cl.: G01V 3/15, G01V 11/00

(54) **VERFAHREN UND MESSGERÄT ZUR ORTUNG VON IN EINEM MEDIUM EINGESCHLOSSENEN OBJEKTEN**
METHOD AND MEASURING INSTRUMENT FOR LOCATING OBJECTS ENCLOSED IN A MEDIUM
PROCEDE ET APPAREIL DE MESURE POUR REPERER DES OBJETS RENFERMES DANS UN MILIEU

(30) Priorität: 14.02.2004 DE 102004007314
(43) Veröffentlichungstag der Anmeldung: 08.11.2006
(73) Patentinhaber: ROBERT BOSCH GMBH, 70442 Stuttgart (DE)
(72) Erfinder: SKULTETY-BETZ, Uwe, 70771 Leinfelden-Echterdingen (DE); HAASE, Bjoern, 70182 Stuttgart (DE); MAHLER, Michael, 70771 Leinfelden-Echterdingen (DE); HOFFMANN, Ulli, 75223 Nieffern-Oeschelbronn (DE); KRAPF, Reiner, 72770 Reutlingen (DE); WIELAND, Christoph, 71083 Herrenberg-Kuppingen (DE)
(86) Internationale Anmeldenummer: PCT/EP2005/050162
(87) Internationale Veröffentlichungsnummer: WO 2005/078480

(56) Entgegenhaltungen:
- EP-A- 0 428 502
- EP-A- 0 751 403
- WO-A1-03/073131
- US-A1- 2003 169 036
- US-A1- 2003 193 429
- US-B1- 6 198 271
- US-B1- 6 211 662

## Beschreibung

Die Erfindung betrifft ein Verfahren bzw. ein Messgerät zur Ortung von in einem Medium eingeschlossenen Objekten nach dem Oberbegriff des Anspruchs 1 bzw. des Anspruchs 5. Ein solches Verfahren bzw. ein solches Messgerät nutzt eine kapazitive Sensorvorrichtung, die ein hochfrequentes Detektionssignal, in Form eines elektromagnetischen Feldes erzeugt, so dass dieses Feld in das zu untersuchende Medium eingreift. Ein in dem Medium eingeschlossenes Objekt beeinflusst unter anderem die Dielektrizitätskonstante des Mediums und somit auch die Dielektrizitätskonstante der messenden kapazitiven Sensorvorrichtung. Durch eine Auswertung des Detektionssignals, insbesondere durch eine Impedanzmessung der kapazitiven Sensorvorrichtung können Informationen über das in dem Medium eingeschlossene Objekt gewonnen werden können.

### Stand der Technik

Ein derartiges Messgerät zur Ortung von in einem Medium eingeschlossenen Objekten bzw. ein entsprechendes Verfahren ist aus der DE 102 07 424 A1 bekannt. Das Messgerät der DE 102 07 424 A1 detektiert ein in einem Medium eingeschlossenes Objekt anhand der Änderung der elektrischen Kapazität seiner kapazitiven Sensorvorrichtung, welche durch ein eingeschlossenes Objekt erzeugt wird. Das in dem Medium eingeschlossene Objekt ändert die dielektrischen Eigenschaften des Mediums, so dass ein in die Nähe des Objektes gebrachter Messkondensator eine auf das Objekt zurückgehende Kapazitätsänderung bzw. eine Änderung seiner Impedanz erfährt. DieseImpedanzänderung lässt sich beispielsweise durch den Verschiebestrom des Messkondensators der kapazitiven Sensorvorrichtung messen.

Das Ortungsgerät der DE 102 07 424 A1 enthält einen kapazitiven Sensor, der im Wesentlichen aus einem Messkondensator mit zwei Kondensatorelektroden besteht. Durch Anlegen einer elektrischen Spannung wird ein elektrisches Hochfrequenzfeld zwischen den Elektroden des Messkondensators erzeugt. Zwischen den Kondensatorelektroden fließt auf Grund der angelegten Wechselspannung ein sogenannter Verschiebestrom. Dieser Verschiebestrom ist bei fester Spannung umso größer, je geringer die Impedanz, d.h. der komplexe Widerstand des Messkondensators ist. Die Impedanz des Messkondensators wird im Wesentlichen bestimmt durch die zwischen den Kondensatorelektroden befindliche Materie. Wird ein Ortungsgerät mit einem solchen Messkondensator nun in die Nähe eines eingeschlossenen Objektes gebracht, so ändert sich die Zusammensetzung der Materie in dem vom elektrischen Feld des Messkondensators überstrichenen Bereich. Insbesondere ergibt sich durch ein eingeschlossenes Objekt eine geänderte Dielektrizitätskonstante der Materie und damit eine geänderte Impedanz der Messanordnung.

Über einen entsprechenden Auswertealgorithmus ermöglicht das Messgerät der DE 102 07 424 A1 die Bestimmung der Lage des eingeschlossenen Objektes. Über einen im Messgerät integrierten Monitor kann die aufgearbeitete Information an einen Nutzer weiter gegeben werden. Der Nutzer kann somit beispielsweise darauf schließen, wo und wieweit er in eine Wand bohren darf, ohne Gefahr zu laufen, einen in der Wand eingeschlossenen Gegenstand anzubohren.

Auf Grund der verwendeten Hochfrequenz, die beim Messgerät der DE 102 07 424 A1 in Bereich von ca. 2 Ghz liegt, wird auch den Nachweis kleinster dielektrischer Einschlüsse, welche durch verborgene Objekt hervorgerufen werden ermöglicht. Auf diese Weise ist es mit diesen Messgeräten möglich, neben metallischen Einschlüssen auch nichtmetallische Gegenstände, wie beispielsweise Holz oder Kunststoffe, beispielsweise in einer Wand oder einem Boden zu detektieren.

Die US 6,198,271 B1 offenbart ein elektronisches Display für einen sogenannten StudSensor, sowie ein Verfahren zur Darstellung detektierter·Objekte auf einem derartigen elektronische Display. Der Stud-Senor zur Detektion von Balken, welche sich beispielsweise hinter Trockenbauwänden befinden, besitzt drei kapazitive Sensor-elemente. Während das zugehörige Messgerät (Stud-Sensor) mit den Sensorelementen über die zu untersuchende Wand verfahren wird, detektiert eine elektronische Vergleichsschaltung die relativen Aufladungszeiten, die mit jedem der kapazitiven Elemente verbunden sind. Ein hinter der Wand verbogenes Objekt ändert die Kapazität der Sensorelemente und kann somit detektiert werden. Die Ladezeiten sind dabei ein Maß für die jeweiligen Kapazitäten der Sensorelemente. Unterschiedliche Änderungen der Ladezeiten mit der Bewegung des Messgerätes über die zu untersuchende Wand, resultieren aus den unterschiedlichen Positionen der einzelnen Sensorelemente zu dem hinter der Wand verborgenden Objekt. Aus dem Vergleich der Signaländerungen der drei Sensorelemente ist eine exakte Lokalisierung des verborgenen Gegenstandes relativ zum Ortungsgerät möglich. Hierbei werden über die elektronische Vergleichschaltung die Unterschiede in den detektierten Kapazitäten genutzt, um eine möglichst genaue Lokalisierung der Randbereiche des eingeschlossenen Objektes zu ermöglichen. Ein flächiges Display des Stud-Sensors erlaubt dabei beispielsweise mit Hilfe einer Segmentdarstellung die graphische Lokalisierung eines unter dem Messgerät liegenden Objektes. Die WO03073131 offenbart ein Verfahren zur Ortung von in einem Medium eingeschlossenen Objekten, bei welchem mittels zumindest eines kapazitiven Hochfrequenzsensors ein erstes, hochfrequentes Detektionssignal erzeugt wird, welches in das zu untersuchende Medium eingreift.

### Vorteile der Erfindung

Das erfindungsgemäße Verfahren zur Ortung von in einem Medium eingeschlossenen Objekten verarbeitet neben dem Detektionssignal einer hochfrequenten kapazitiven Sensorvorrichtung mindestens ein weiteres Detektionssignal. Ein solches Verfahren nutzt zum einen eine kapazitive Sensorvorrichtung, die ein hochfrequentes Detektionssignal, in Form eines elektromagnetischen Feldes erzeugt, so dass dieses Feld in das zu untersuchende Medium eingreift. Ein in dem Medium eingeschlossenes Objekt beeinflusst unter anderem die Dielektrizitätskonstante des Mediums und somit auch die Dielektrizitätskonstante der messenden kapazitiven Sensorvorrichtung. Durch eine Auswertung des hochfrequenten Detektionssignals, insbesondere durch eine Impedanzmessung der kapazitiven Sensorvorrichtung können Informationen über die Lage des in dem Medium eingeschlossene Objektes gewonnen werden können.

Darüber hinaus wertet das erfindungsgemäße Verfahren zudem noch mindestens ein weiteres, zusätzliches Detektionssignal aus. Mittels des zusätzlichen Detektionssignals ist es in vorteilhafter Weise möglich, zusätzliche Informationen über das eingeschlossene Objekt zu gewinnen.

Die Kombination der aus den mindestens zwei Detektionssignalen gewonnenen Informationen ermöglicht es beispielsweise, neben einer reinen Ortung des Objektes, d.h. der Bestimmung der Objektlage bzw. Objekttiefe, auch eine Identifikation des Objektmaterials durchzuführen. So können beispielsweise unterschiedliche Materialien auf diese Weise unterschieden werden. Wird ein solches Messgerät beispielsweise vor Tiefenbohrungen in einer Wand eingesetzt, so lässt sich neben der reinen Ortung des Objektes im Voraus auch bereits eine Aussage über die "Gefährlichkeit" der im Medium eingeschlossenen Objekte treffen. So können gegebenenfalls stromführende Leitungen von Holzbalken oder dergleichen unterschieden werden.

Durch eine entsprechende Schaltung ist es möglich, den kapazitiven Hochfrequenzsensor als gewöhnlichen, d.h. niederfrequenten kapazitiven Sensor in der Art eines Studfinders zu verwenden. Dazu lässt sich beispielsweise die Ansteuerung des zugehörigen Messkondensators derart modulieren, dass sie zwischen der Hochfrequenzanregung und der niederfrequenten Betriebsweise hin- und hergeschaltet wird ("Quasi-Parallel-Betrieb"). Auch ist es beispielsweise möglich, die Elektroden des kapazitiven Hochfrequenzsensors erfindungsgemäß derart anzusteuern, dass er in Art eines Netzspannungsdetektors, der kapazitiv das Wechselspannungsfeld beispielsweise einer Netzspannungsleitung erfassen kann, zu betreiben. In diesem Fall würde der kapazitive Sensor passiv, d.h. ohne Erzeugung eines elektrischen Feldes, arbeiten und somit ermöglichen, die Lage und den Verlauf von Netzspannungsleitungen beispielsweise in Wänden aufzuzeigen.

Mit dem erfindungsgemäßen Verfahren ist es daher möglich unter Verwendung lediglich eines Sensors, eine Reihe unterschiedlicher Detektionssignale zu generieren, die über ihre Auswertung zusätzliche Informationen über ein eingeschlossenes Objekt dem Nutzer eines entsprechenden Messgerätes ermöglichen.

Darüber hinaus gestattet die Verwendung von zusätzlichen Detektionssignalen eine genauere Ortung der eingeschlossenen Gegenstände, da der das erste Detektionssignal erzeugende Sensor aufgrund der Messergebnisse des zweiten Detektionssignals optimiert und auf die spezielle Messsituation angepasst werden kann. Beispielsweise erkennt ein kapazitiver Sensor durch die Messung der dielektrischen Impedanz eine Holzständerwand. Ein im Gerät integrierter Radarsensor kann dann so betrieben werden, dass Lufteinschlüsse zwar vermessen werden, nicht jedoch in der Anzeige des Gerätes angezeigt werden. Dies kann beispielsweise dadurch erreicht werden, dass die dem Radarsensor nachgeschaltete Signalverarbeitung, die Signale der Lufteinschlüsse über gängige Mittelungsverfahren herausmittelt. Auf diese Weise lässt sich der Radarsensor optimiert betreiben.

Durch die in den abhängigen Ansprüchen aufgeführten Merkmale sind vorteilhafte Weiterbildungen des erfindungsgemäßen Verfahrens gemäß Anspruch 1 möglich.

In einer Ausführungsform des erfindungsgemäßen Messgerätes bzw. des dem Messgerät zugrunde liegenden Verfahrens wird das mindestens eine weitere Detektionssignal, welches zur Auswertung und Informationsgewinnung herangezogen wird, von mindestens einem weiteren Sensor erzeugt. Durch die Verwendung von getrennten Sensoren für die unterschiedlichen Detektionssignale ist es möglich die Messungen parallel durchzuführen, was nicht zuletzt eine Reduzierung der Messzeit bedeutet.

So ist beispielsweise mit einem induktiven Sensor die Unterscheidung von metallischen und nichtmetallischen Objekten möglich. Darüber hinaus kann beispielsweise die Vorab-Kalibierung von induktiven Sensoren entfallen, da sie beispielsweise automatisch durchgeführt werden kann, wenn beispielsweise der kapazitive Hochfrequenzsenor erkennt, dass kein Objekt vorhanden ist.

Das erfindungsgemäße Verfahren lässt es in vorteilhafter Weise auch zu, gezielt nach bestimmten Objekten zu suchen. So kann durch eine entsprechende Schaltung, die eine vordefinierte Suchroutine ansteuert, beispielsweise speziell nach elektrischen Kabeln oder Metallen gesucht werden. Ebenfalls in der Wand vorhandene Hohlräume oder andere Objekte, die nicht den Suchkriterien entsprechen, können dann auf der Anzeige des Messgerätes beispielsweise ausgeblendet werden, so dass ein Nutzer nur die gewünschten Informationen erhält. So ist es mit dem erfindungsgemäßen Verfahren möglich, in der Anzeige des Messgerätes beispielsweise nacheinander oder gleichzeitig Metalle, stromführende elektrische Leitungen, Kunststoffe oder auch Objekte aus Holz oder Hohlräume darzustellen. Auf diese Weise ist es auch möglich, Materialdickenmessungen , wie beispielsweise Betonüberdeckungen bei Stahlbetonbauten oder Estrichdickenmesssungen bei Fußbodenheizungen durchzuführen.

In einer vorteilhaften Ausführungsform des erfindungsgemäßen Verfahrens werden die Detektionssignale einer ganzen Reihe von Sensoren zur Auswertung herangezogen. Bei diesen Sensoren kann es sich beispielsweise um kapazitive Sensoren, induktive Sensoren, photometrische Sensoren, wie beispielsweise Infrarotsensoren oder auch Radarsensoren oder Ultraschallsensoren handeln. Diese Sensoren werden einzeln oder in Gruppen zusammengeschaltet. Dies kann beispielsweise manuell oder auch automatisch, d.h. von einer entsprechenden Routine, welche in einem Speicherelement des Messgerätes abgelegt ist, gesteuert erfolgen.

In einer vorteilhaften Auswerteroutine des erfindungsgemäßen Verfahrens kann vorgesehen sein, die Detektionssignale aller aktiven Sensoren auszuwerten und lediglich diejenigen mit einem eindeutigen Signal exklusiv für die nachgeschaltete Datenverarbeitung zu verwenden. Die Messergebnisse der anderen Sensoren würden dabei ignoriert. Erkennt ein induktiver Sensor bei der Vermessung einer Fußbodenheizung Metallobjekte unterschiedlicher Größe im Boden, so könnten die schwächeren Signale ausgeblendet werden, da diese aus einer im Boden resultierenden Baustahlmatte resultieren. Erkennt der induktive Sensor jedoch nur eine Art von Metallobjekten, und auch ein Radarsensor erkennt keine zusätzlichen Objekte, so sind die vom induktiven Sensor detektierten Signale Metallrohre der Fußbodenheizung. Erkennt der Radarsensor jedoch weitere Objekte so handelt es sich bei diesen zusätzlichen Objekten um Kunststoffrohre der Fußbodenheizung. Die Metallobjekte können dann wieder entsprechend in der Anzeige der Messergebnisse ausgeblendet werden. Auf diese Weise ist es möglich, lediglich die relevanten Informationen sichtbar zu machen.

Insbesondere ist es in vorteilhafter Weise auch möglich, einen Sensor, oder das zur Messung genutzte Detektionssignal eines Sensors durch die Auswertung und Erkenntnisse des mindestens einen weiteren Detektionssignales zu optimieren. So ist in einer Ausführungsform des erfindungsgemäßen Verfahrens vorgesehen, der Ansteuerung der einzelnen Sensoren jeweils verschiedene "Programme" einzuschreiben, beispielsweise ein "Metallprogramm", ein "Hohlziegelprogramm", ein "Kunststoffprogramm", etc. Solche speziellen Suchprogramme lassen sich einzelnen Sensoren zuschreiben, die spezielle Vorteile bei der Detektion eines solchen Objektes aufweisen. Wird bei einer Messung von einem oder mehreren Sensoren ein spezielles, einprogrammiertes Szenario erkannt, d.h. liefert ein oder mehrere Sensoren Hinweise auf beispielsweise einen speziellen Werkstoff, so werden alle Sensoren auf dieses Programm eingestellt bzw. wird die Sensoransteuerung und Auswertung auf den nunmehr bekannten Werkstoff optimiert. Auf diese Weise ist es möglich genauere Ergebnisse zu liefern, da beispielsweise mit optimal auf das identifizierte Objekt abgestimmten Empfindlichkeiten der einzelnen Sensoren gearbeitet werden kann.

In einer vorteilhaften Ausführungsform eines erfindungsgemäßen Messgerätes sind mehrere Sensoren in einem gemeinsamen Gehäuse des Messgerätes integriert. Die Sensoren können dabei beispielsweise auf einer gemeinsamen Leiterplatte angeordnet sein. Vorteilhaft ist es beispielsweise die Sensoren alle auf eine gemeinsame Achse hin auszurichten, so dass die entsprechenden Detektionssignale auf ein und denselben Punkt gerichtet sind.

Besitzt das Gerät eine Wegsensorik, so können nicht nur die aktuellen Signalpegel der verschiedenen Sensoren gemessen werden, sondern es können darüber hinaus auch Signalverläufe erfasst und dargestellt werde. Dadurch wird auch eine 2-dim Darstellung im Display des Messgerätes möglich, bei der neben einer Weginformation auch eine Tiefeninformation dargestellt wird. Dies unterscheidet sich in vorteilhafter Weise von Metallortungsgeräten des Standes der Technik, bei denen zumeist über eine oder mehrere optische Signallampen das aktuelle Messergebnis am Ort der Messung angezeigt wird.

In alternativen Ausführungsformen des erfindungsgemäßem Messgerätes ist es aber auch möglich, die Sensoren teilweise auf einer gemeinsamen Platine und teilweise an anderen Stellen im Gehäuse des Messgerätes beispielsweise in einem Gehäuseboden des Gerätes zu integrieren.

Eine besonders vorteilhafte Ausgestaltung des Messgerätes ergibt sich bei Verwendung von externen Sensoren, die mittels eines Ansteckmoduls und einer entsprechenden Schnittstelle mit dem Messgerät und den darin vorhandenen Sensoren verkoppelt werden können.

Beispielsweise kann auch vorgesehen sein, eine ganze Reihe unterschiedlicher Sensoren im Messgerät zu integrieren und diese über eine entsprechende Software zu ihrer Ansteuerung frei zu geben. Auf diese Weise ist es möglich, mit einem Serienprodukt unterschiedlichen Anforderungen verschiedener Nutzer Rechnung zu tragen.

Weitere Vorteile des erfindungsgemäßen Verfahrens zur Ortung von in einem Medium eingeschlossenen Objekten bzw. eines entsprechenden Messgerätes sind in der nachfolgenden Zeichnung sowie in der zugehörigen Beschreibung offenbart.

### Zeichnung

In der Zeichnung sind Ausführungsbeispiele des erfindungsgemäßen Ortungsgerätes bzw. des zu Grunde liegenden Verfahrens zur Ortung von in einem Medium eingeschlossenen Objekten dargestellt, die in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die hiermit als ebenfalls in diesem Text offenbart anzusehen sind.

Es zeigt:
- Figur 1: den schematischen Aufbau eines erfindungsgemäßen Ortungsgeräts,
- Figur 2: einen Schnitt durch die Sensorvorrichtung eines ersten Ausfuhrungsbeispiels des erfindungsgemäßen Messgerätes,
- Figur 3: das Ausführungsbeispiel des erfindungsgemäßen Messgerätes gemäß Figur 2 in einer schematisierten Unteransicht,
- Figur 4: die Sensoreinheit eines zweiten Ausfuhrungsbeispiels eines erfindungsgemäßen Messgerätes in einer zu Figur 3 analogen Unteransicht,
- Figur 5: ein weiteres Ausführungsbeispiel der Sensoreinheit eines erfindungsgemäßen Messgerätes in einer zu Figur 3 und Figur 4 analogen Darstellung.

### Beschreibung der Ausführungsbeispiele

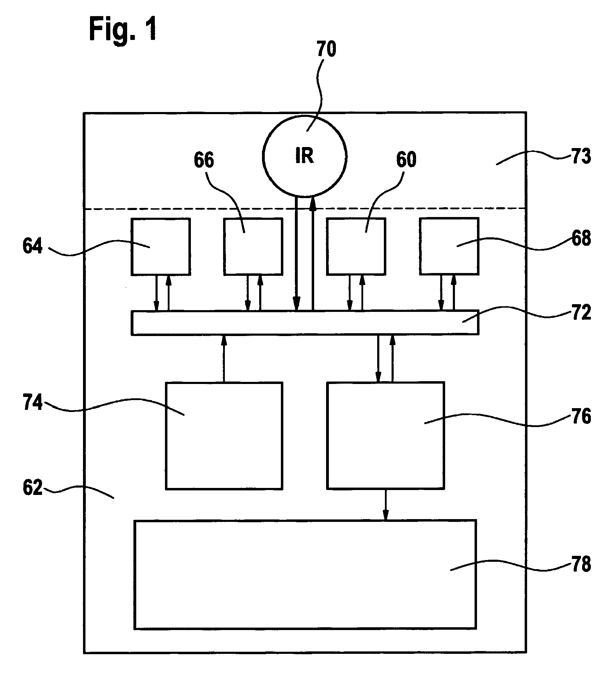

Figur 1 zeigt in einer schematischen Darstellung das der Erfindung zu Grunde liegende Verfahren bzw. den prinzipiellen Aufbau eines Messgerätes für das erfindungsgemäße Verfahren. Neben einem kapazitiven Hochfrequenzsensor 60 weist das erfindungsgemäße Messgerät 62 nach dem Ausführungsbeispiel der Figur 1 einen induktiven Sensor 64, einen weiteren kapazitiven Sensor 66, einen Radarsensor 68 sowie einen photometrischen Sensor (92) in Form eines Infrarotdetektors 70 auf. Weitere Sensoren können in entsprechenden Ausführungsbeispielen vorhanden sein.

Durch eine zentrale Steuereinheit 72 werden die einzelnen Sensoren angesteuert und ausgewertet. Bei dem erfindungsgemäßen Verfahren können die Sensoren sowohl einzeln, als auch in Gruppen bzw. alle zusammen geschaltet werden. Die Wahl der Betriebsart, d.h. die Auswahl, welche Sensoren für eine bestimmte Messung genutzt werden sollen, kann zum einen über einen manuellen Betriebswahlschalter 74 erfolgen, der in einem Bedienfeld des Messgerätes integriert ist und von einem Nutzer nach seiner Wahl betätigt werden kann. Neben dieser manuellen Auswahl der Betriebsart durch den Benutzer ist auch eine automatische Betriebsartauswahl ("automatischer Betrieb") über ein entsprechendes Steuerprogramm möglich, welches in einem Speichermedium des Messgerätes abgelegt ist.

Das erfindungsgemäße Verfahren ermöglicht es, verschiedene Sensoren sowohl parallel, quasi-parallel, als auch seriell zu nutzen. Dabei wird bei der quasi-parallelen Betriebsart sehr schnell zwischen einzelnen Sensoren umgeschaltet und die entsprechenden Detektionssignale generiert, gemessen und ausgewertet, bzw. zur Auswertung gegebenenfalls zwischengespeichert. Hier kann ebenfalls zwischen einer automatischen und einer vom Benutzer vorgegebenen Auswahl der Sensoren gewählt werden.

Durch eine entsprechende Auswerteeinheit 76 werden die einzelnen Mess-Signale der Sensoren ausgewertet, miteinander verglichen und daraufhin beispielsweise einzelne Sensoren in Abhängigkeit der Messergebnisse anderer Sensoren optimiert. So ist in einer Ausführungsform des erfindungsgemäßen Verfahrens vorgesehen, der Ansteuerung der einzelnen Sensoren jeweils verschiedene "Programme" einzuschreiben, beispielsweise ein "Metallprogramm", ein "Hohlziegelprogramm", ein "Kunststoffprogramm", etc. Solche speziellen Suchprogramme lassen sich den einzelnen Sensoren zuordnen. Wird bei einer Messung von einem oder mehreren Sensoren ein spezielles, einprogrammiertes Szenario erkannt, d.h. liefern einige Sensoren Hinweise auf beispielsweise einen speziellen Werkstoff, so werden alle Sensoren auf dieses Programm umgestellt und liefern somit genauere, optimierte Messergebnisse, da beispielsweise mit optimal abgestimmten Empfindlichkeiten gearbeitet werden kann.

In einer vorteilhaften Auswerteroutine des erfindungsgemäßen Verfahrens kann vorgesehen sein, die Detektionssignale aller aktiven Sensoren auszuwerten und lediglich diejenigen mit einem eindeutigen Signal exklusiv für die nachgeschaltete Datenverarbeitung zu verwenden. Die Messergebnisse der anderen Sensoren werden dabei für die weitere Auswertung ignoriert.

Der Auswerteeinheit 76 ist eine Einheit zur Datenverarbeitung und eine Anzeige 78 nachgeschaltet Die Daten der Auswerteeinheit 76 werden aufgearbeitet und in eine für den Nutzer intuitiv zugängliche Darstellungsweise überführt. So kann das Messergebnis beispielsweise in Form einer graphischen Darstellung der aktuellen Messsituation ausgearbeitet werden. Über eine im Messgerät integrierte Anzeige wird das Mess-Signal, insbesondere in Echtzeit, dem Nutzer beispielsweise in der Art eine Schnittdarstellung durch die untersuchte Wand übermittelt.

So kann bei der Datenverarbeitung beispielsweise vorgesehen sein, alle Sensorsignale mittels Hauptkomponentenanalyse neuronaler Netze auszuwerten und über eine Mustererkennung das wahrscheinlichste Ergebnis über die Anzeige auszugeben. Auch kann eine entsprechende Routine vorgesehen sein, die jeden Sensor entsprechend seiner Detektionsgrenzen gewichtet in das Ergebnis eingehen lässt. Dies ermöglicht, obwohl jeder einzelne Sensor für sich festgelegte Grenzen der Detektion aufweist, ein Gesamtergebnis mit "weichen" Grenzen. Hier ist beispielsweise der Einsatz einer Fuzzy Logik vorteilhaft.

Die für das Verfahren vorgesehenen, einzelnen Sensoren können allesamt in einem Gehäuse des Messgerätes integriert sein bzw. ist es auch möglich, spezielle adaptive Varianten des erfindungsgemäßen Messgerätes zu realisieren. Dabei könnten Zusatzdetektoren, wie beispielsweise der Infrarotdetektor (70), auf das Messgerät (62) mit kapazitivem Hochfrequenzdetektor (60) und beispielsweise einem induktiven Detektor (64) modular aufgesetzt werden. Über eine gemeinsame Schnittstelle kann dann die Ansteuerung und Auswertung auch des Infrarotsensors über das eigentliche Messgerät erfolgen.

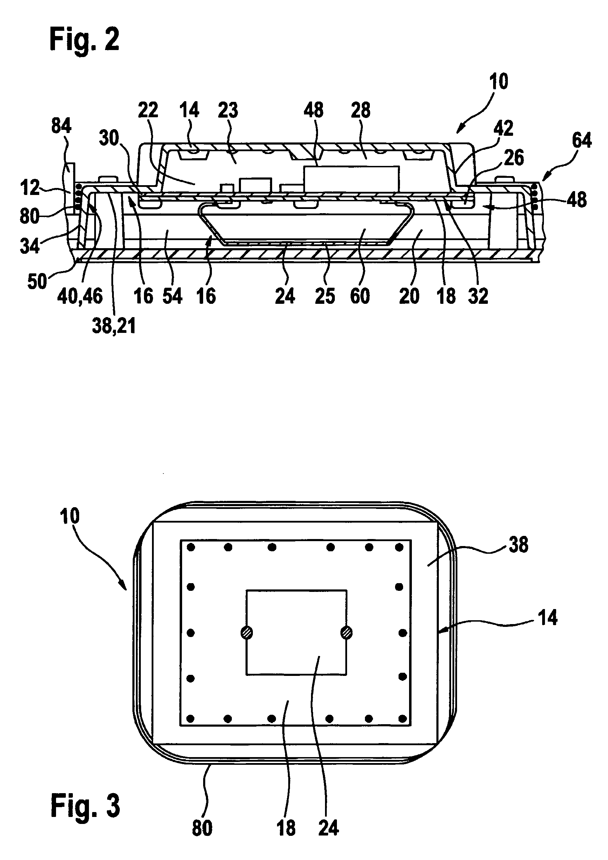

Figur 2 zeigt einen Schnitt durch das Frontend, d.h. durch den Sensorkopf (10) eines erfindungsgemäßen Messgerätes. Das Messgerät (62) gemäß dem Ausführungsbeispiel der Figur 2 weist einen kapazitiven Hochfrequenzsensor (60) sowie einen induktiven Sensor (64) in Form einer Spule auf.

Die Sensorvorrichtung 10 besitzt dabei ein Gehäuse 14 mit einer leitfähigen Oberfläche. Das Gehäuse 14 lässt sich beispielsweise aus einem Metall als einstückiges Druckgussteil oder aber auch durch einen Formgebungsprozess aus metallisiertern Kunststoff realisieren. Ebenfalls sind metallisch leitende Beschichtungen für das Gehäuse 14 der Sensorvorrichtung möglich. Das Gehäuse des Sensors ist einseitig in Richtung eines Messobjektes offen, umschließt wesentliche Komponenten der Sensorvorrichtung und ist selbst integraler Bestandteil dieser Sensorvorrichtung.

Die Sensorvorrichtung 10 weist im Wesentlichen drei Bauteilgruppen auf. Die erste Gruppe dieser Bauteile sind elektrische Schaltkreise 48 zur Erzeugung und Verarbeitung der Mess- bzw. Detektionssignale. Die zweite Baugruppe der Sensorvorrichtung umfasst einen kapazitiven Hochfrequenzsensor, der im erfindungsgemäßen Ortungsgerät durch einen speziell gestalteten Messkondensator 16 realisiert ist. Um das Gehäuse 14 der Sensorvorrichtung herum ist als dritte Baugruppe eine Spulenanordnung 12 vorgesehen, die zusammen mit entsprechenden elektronischen Schaltkreisen und Bauelementen 48 einen induktiven Sensor zur Detektion insbesondere metallischer Gegenstände bildet.

Die genannten drei unterschiedlichen Baugruppen sind in unterschiedlichen, voneinander getrennten Teilräumen des Sensorkopfes 10 angeordnet. Während die Spulenanordnung 12 des induktiven Sensors außerhalb des Gehäuses 14 verläuft, sind die elektrischen Schaltkreise 48 sowie der Messkondensator des kapazitiven Hochfrequenzsensors innerhalb des Gehäuses angeordnet, jedoch durch eine Leiterplatte 18 voneinander getrennt. Die Leiterplatte 18 ist im Gehäuse 14 an ihren Rändern mit dem Gehäuse 14 fixiert. Das Gehäuse besitzt dazu in dem Ausführungsbeispiel nach Figur 2 eine charakteristische Schulter 42, auf die die Leiterplatte 18 aufgelegt ist. Das derart geformte Gehäuse 14 wird so in einem nicht weiter dargestellten Gehäuse des Ortungsgerätes eingebaut, dass die beiden Teilräume für Elektronik bzw. kapazitiven Hochfrequenzsensor übereinander angeordnet sind. Die Teilräume 20 und 22 sind durch die Leiterplatte 18 derart voneinander getrennt, dass ein erster offener Teilraum 20 für den kapazitiven Sensor und ein zweiter geschlossener Teilraum 22 für die Elektronikkomponenten gebildet wird. Der zweite Teilraum 22 wird gebildet durch eine Ausbuchtung 28 des Gehäuses 14 sowie durch die Leiterplatte 18, die fest mit dem Gehäuse verbunden ist. In vorteilhafter Weise ist eine metallisierte Schicht 30 auf bzw. in der Leiterplatte 18 integriert, so dass der Teilraum 22 des Gehäuses 14 von einer elektrisch leitenden Oberfläche eingeschlossen ist. Auf diese Weise bildet der Teilraum 22 einen "Faraday'schen Käfig" 23, der es ermöglicht, die im Teilraum 22 angeordneten elektronischen Bauelemente gegen elektromagnetische Störungen zu isolieren. Die Leiterplatte 18 trägt, wie in Figur 2 zu erkennen ist, auf ihrer einen Seite die elektrischen Schaltkreise und Bauelemente 48 zur Erzeugung und Auswertung des Mess-Signals. Auf der anderen Seite der Leiterplatte 18 ist eine Elektrode 24 des Messkondensators 16 befestigt.

Der erste Teilraum 20 des Gehäuses 14 der Sensorvorrichtung 10, in welchem der kapazitive Hochfrequenzsensor untergebracht ist, wird im Wesentlichen gebildet durch die Oberfläche 32 der Leiterplatte 18 sowie durch Seitenwände 34 des Gehäuses 14. In die Seitenwände 34 sind Aussparungen 36 integriert, die es ermöglichen, das Gehäuse 14 der Sensorvorrichtung in das Gehäuse eines Ortungsgerätes zu verankern.

Der erste Teilraum 20 des Gehäuses 14 ist einseitig durch eine Öffnung 54 geöffnet und trägt im Wesentlichen den Messkondensator 16 des kapazitiven Hochfrequenzsensors. Der Messkondensator 16 wird gebildet durch die Innenfläche 38 des Teilraumes 20 des Gehäuses 14, welche eine erste Elektrode 21 des Messkondensators bildet, sowie durch die auf der Leiterplatte 18 befestigte zweite Elektrode 24. Auf diese Weise ist es möglich, den Messkondensator 16 lediglich durch eine zusätzliche Elektrode 24 zu realisieren. Die erste Elektrode 21 des Messkondensators 16 wird in vorteilhafter Weise durch das Gehäuse 14 selbst realisiert.

Der erste Teilraum 20 kann, wie im Ausführungsbeispiel der Figur 2 dargestellt, durch eine Wand 50 des zugehörigen Messgerätes verschlossen sein, so lange diese Abschottung kein Hindernis für das elektrische Feld des Messkondensators 16 darstellt. Aus diesem Grunde kann die Wand 50 beispielsweise durch eine Seite eines Kunststoffgehäuses des erfindungsgemäßen Ortungsgerätes realisiert werden. Das erfindungsgemäße Ortungsgerät würde in diesem Fall mit der Gehäusewand 50 über die zu vermessende Struktur, beispielsweise eine Decke oder einen Boden, geführt werden. Die Wand 50 dient zudem dem mechanischen Schutz der Elektrode 24 des Messkondensators 16 vor Beschädigungen.

Um das Gehäuse 14 der Sensorvorrichtung herum gewickelt sind die Spulenelemente 80 der Spulenanordnung 12 eines im erfindungsgemäßen Messgerätes induktiven Sensors 64. Die Spulenelemente 80 können dabei beispielsweise auf einen Spulenträger 84 aufgebracht bzw. in diesem vergossen sein. Über entsprechende Verbindungsmittel sind die Spulenelemente 80 mit einer nicht weiter dargestellten Energieversorgung sowie den elektronischen Bauelementen 48 zur Ansteuerung und Auswertung verbunden. Auch ist es in anderen Ausführungsformen möglich, beispielsweise die induktive Sensorvorrichtung auch in den Kunststoffboden 50 des Messgerätes 62 zu integrieren.

Figur 3 zeigt in einer vereinfachten schematischen Darstellung eine Unteransicht des Sensorkopfes 10 eines erfindungsgemäßen Messgerätes gemäß Figur 2, bei abgenommener Schutzwand 50. Die Elektrode 24 des Hochfrequenzmesskondensators 16 ist in etwa mittig auf die Sensorplatine 18 aufgebracht. Die Sensorplatine 18 bildet dabei zusammen mit der Innenseite des Gehäuses 14 des Sensorkopfes die erste Elektrode 21 des Messkondensators 16. Um das Gehäuse 14 herum angeordnet sind die Spulenelemente 80 des induktiven Sensors 64 des erfindungsgemäßen Messgerätes.

Durch eine entsprechende Schaltung ist es bei dem erfindungsgemäßen Verfahren möglich, den Messkondensator 16 des kapazitiven Hochfrequenzsensors 60 auch als gewöhnlichen, d.h. niederfrequenten kapazitiven Sensor 66 in der Art eines Studfinders zu verwenden. Dazu lässt sich beispielsweise die Ansteuerung des Messkondensators 16 derart modulieren, dass sie zwischen der Hochfrequenzanregung und der niederfrequenten Betriebsweise hin- und hergeschaltet wird. Auch ist es beispielsweise möglich, den einen Messkondensator 16 des erfindungsgemäßen Ortungsgerätes gemäß Figur 2 bzw. Figur 3 derart anzusteuern, dass er in Art eines Netzspannungsdetektors 65, der kapazitiv das Wechselspannungsfeld beispielsweise einer Netzspannungsleitung erfassen kann. In diesem Fall würde der kapazitive Sensor passiv, d.h. ohne Erzeugung eines elektrischen Feldes, arbeiten und somit ermöglichen, die Lage und den Verlauf von Netzspannungsleitungen beispielsweise in Wänden aufzuzeigen.

Durch die Ansteuerelektronik, die im erfindungsgemäßen Messgerät vorgesehen ist, wird ermöglicht, dass mit lediglich einem Sensor, im Ausführungsbeispiel der Figur 1 mit dem einen Messkondensator 16, verschiedene Detektionssignale erzeugt werden. Diese Detektionssignale können dann quasi-parallel oder auch seriell ausgewertet werden, so dass über die Auswertung zusätzliche Informationen über das in einem Medium eingeschlossene, zu vermessene Objekt gewonnen werden können. Der Messkondensator 16 des kapazitive Sensors kann dabei insbesondere als konventioneller, d.h. niederfrequenter kapazitiver Sensor 66, als Netzspannungsdetektor 65, oder aber auch als Hochfrequenzdetektor 60, angesteuert werden. In vorteilhafter Weise sind dabei die Detektionssignale automatisch auf ein und denselben Punkt auf der zu untersuchende Fläche ausgerichtet. Es wird somit immer, d.h. auch bei einem umschalten des Detektionssignals, das selbe Messgebiet untersucht Ein Messfehler durch Vermessung unterschiedlicher räumlicher Gebiete wird in diesem Ausführungsbeispiel eines erfindungsgemäßen Messgerätes nahezu ausgeschlossen.

In einem alternativen Ausführungsbeispiel ist es möglich, den unterschiedlichen Detektionssignalen auch jeweils einen eigenständigen Sensor, beispielsweise jeweils einen Messkondensator zuzuordnen, so dass der rein parallele Betrieb zur Gewinnung mehrer Detektionssignale auf Kosten eines dann etwas größeren Bauraumes ermöglicht wird.

Das erfindungsgemäße Verfahren lässt es in vorteilhafter Weise auch zu, gezielt nach bestimmten Objekten zu suchen. So kann durch eine entsprechende Schaltung, die eine vordefinierte Suchroutine ansteuert, beispielsweise speziell nach stromführenden Kabeln oder Metallen gesucht werden. Ebenfalls in der Wand vorhandene Hohlräume können dabei dann auf der Anzeige des Messgerätes automatisch oder vom Nutzer vorgegeben ausgeblendet, d.h. nicht dargestellt werden, so dass ein Nutzer nur die gewünschten Informationen selektiv erhält.

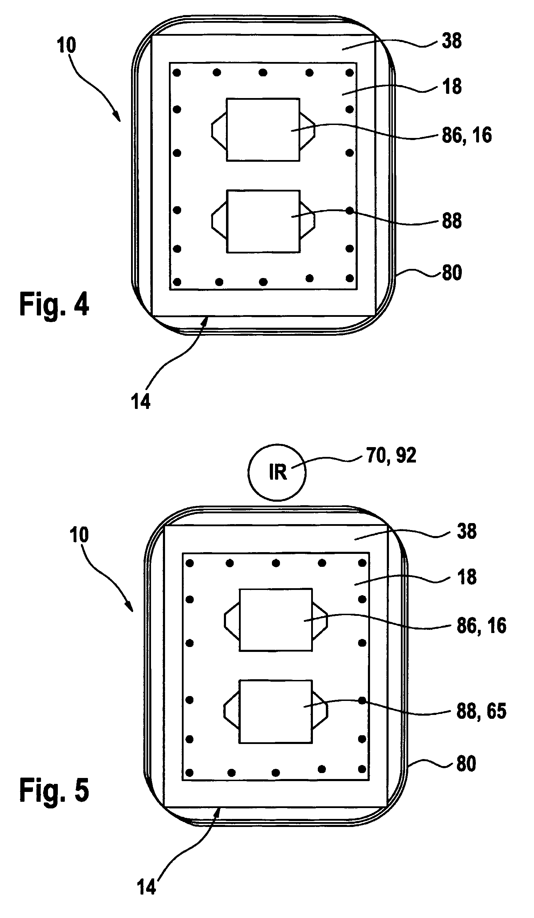

Figur 4 zeigt ein weiteres Ausführungsbeispiel des Sensorkopfes eines erfindungsgemäßen Messgerätes in einer zu Figur 3 analogen Darstellung. Gleiche Bauelemente sind dabei mit gleichen Bezugszeichen beziffert. Der Sensorkopf 10 des erfindungsgemäßen Messgerätes gemäß dem Ausführungsbeispiel nach Figur 4 weist im Unterschied zu dem vorherigen Ausfiihrungsbeispiel eine Sendeantenne 86 sowie eine Empfangsantenne 88 eines Radarsensors 68 auf. Derartige Radar-Sensoren bzw. Radardetektoren, die Radarimpulse ("Ultrawideband-Radar", UWB) aussenden, eignen sich prinzipiell ebenso zur Detektion von in Wänden verborgenen Objekten, indem die Radarimpulse von einer Antenne ausgesendet, am Objekt reflektiert und auf die Empfangsantenne zurückgeworfen werden. Das rücklaufende Signal welches Informationen über das eingeschlossenen Objekt enthält, kann dann in entsprechender Weise ausgewertet werden.

Durch eine entsprechende Ansteuerung bzw die geometrische Ausformung der Empfangs- bzw. Sendeantenne des Radarsensors ist es möglich, eine oder beide dieser Antennen auch als Elektrode(n) für einen kapazitiven Sensor 60.65,66, insbesondere für den kapazitiven Hochfrequenzsensor 60 zu benutzen. Auf diese Weise wird vermieden, für den kapazitiven Hochfrequenzsensor 60 eine zusätzliche Elektrode bzw. zwei zusätzliche Elektroden in das Gehäuse des Sensorkopfes 10 integrieren zu müssen. Die Sende- und Empfangsantennen des Radarsensors können auch lediglich durch ein Antennenblech realisiert sein. Der Sensorkopf sehe dann so aus, wie der in Figur 3 dargestellte. Die Ansteuerung der Antenne würde in diesem Fall zuerst einen Radarimpuls aussenden (Sendeantenne) und anschließend die Antenne auf Empfang umschalten, so dass der reflektierte, zurücklaufende Radarimpuls von der selben Antenne (jetzt Empfangsantenne) detektiert würde.

Figur 5 zeigt ein weiteres Ausführungsbeispiel eines Sensorkopfes eines erfindungsgemäßen Messgerätes. Neben den Spulenelementen 80 des induktiven Sensors 64, der Sendeantenne 86 bzw. der Empfangsantenne 88 des Radarsensors 68, die auch als kapazitiver Hochfrequenzsensor 60 angesteuert werden, ist zusätzlich ein photometrischer Sensor 92 in Form eines Infrarotsensors 70 in den Sensorkopf 10 des erfindungsgemäßen Messgerätes integriert.

Infrarotsensoren können dort vorteilhaft eingesetzt werden, wo Temperaturen oder Temperaturunterschiede gemessen werden müssen. So ist es möglich, über moderne IR-Sensoren eine schnelle und zuverlässige Temperaturmessung zu realisieren. Insbesondere ist es möglich, selbst sehr hohe Temperaturen von über 1000 Grad zuverlässig zu messen, da diese Messung berührungslos, lediglich auf Grund der Strahlungswärme erfolgt.

Der Infrarotsensor 70 des erfindungsgemäßen Messgerätes besteht beispielsweise aus einer Halbleiterphotodiode, deren Leitfähigkeit sich mit der auftreffenden Strahlungsintensität ändert, wobei diese Photodiode spezifisch für Wellenlängen im Bereich über 1 Mikrometer (Infrarotstrahlung) empfindlich ist. Interessant ist der Einsatz des erfindungsgemäßen Messgerätes gemäß dem Ausführungsbeispiel in Figur 5, beispielsweise bei Szenarien wie Fußbodenheizungen, Heizungsrohren etc., d.h. bei der Vermessung von Wasserrohren, die in Böden, Wänden oder Decken eingeschlossen sind. Hier möchte man beispielsweise wissen, wo sich die Rohre befinden, um ein Anbohren der Rohre zu vermeiden bzw. bei einem bereits erfolgten Wasserrohrbruch die genaue Lage der Rohre orten. Dabei wird bei herkömmlichen Verfahren beispielsweise auf IR-Sensorgeräte, Wärmebildkameras oder Thermofolien zurückgegriffen. Mit solchen IR-Sensorgeräten des Standes der Technik wird der zu untersuchende Bereich langsam abgescannt und die lokalen Temperaturmaxima angezeichnet. Wärmebildkameras erzeugen im Prinzip Fotos im Infraroten Bereich, die leichte Temperaturunterschiede sichtbar machen können. Thermofolien bestehen aus einem temperaturempfindlichen Material, das sich bei höheren Temperaturen verfärbt. Die Folien sind dabei auf den zu untersuchenden Bereich aufzukleben. Bei all diesen Verfahren kann jedoch keine Tiefeninformation der detektierten Gegenstaände gewonnen werden.

Das erfindungsgemäße Ortungsgerät ermöglicht im Gegensatz zu Geräten des Standes der Technik durch die Kombination mehrerer Sensorprinzipien eine schnelle und leistungsfähige Ortung von beheizten oder gekühlten Rohren in Wänden, Decken oder Böden. Während der IR-Sensor 70 die Grobklassifikation, d.h. eine Unterscheidung beheizte oder gekühlte Rohre, sowie eine Ortung der ungefähren Lage der Rohre vornehmen kann, können durch die weiteren, im erfindungsgemäßen Messgerät integrierten Sensorprinzipien auch die exakte Lage, Tiefe und Größe der Rohre bestimmt werden.

Figur 5 zeigt die Sensorvorrichtung 10, die als abgeschirmtes Gehäuse 14 die Sensorplatine 18 für die Zusatzsensorik beinhaltet. Auf die Sensorplatine 18 aufgelötet sind die Antennen 86 und 88 des Radarsensors 68. Die Antennen werden zusätzlich zur Radarerfassung mittels einer entsprechenden elektronischen Verschaltung auch als kapazitiver Hochfrequenzsensor 60 bzw. Kapazitätssensor 65,66 verwendet. Eine intelligente Software oder entsprechende Elektronik schaltet dazu zwischen den einzelnen Betriebsarten dieser Sensoren sehr schnell um. Um das Gehäuse 14 ist zudem eine Spulenanordnung 80 zur induktiven Detektion gewickelt. Wahlweise kann ein Ferrit für die Spule vorgesehen sein. Art, Größe und Lage der Spulenwicklungen können speziell ausgeformt sein.

Der Infrarotsensor 70 kann sich auch innerhalb des Gehäuses 14, beispielsweise auf der Sensorplatine 18, befinden. Wegen der gegenseitigen Beeinflussung der Sensoren ist es jedoch typischerweise besser, ihn außerhalb des Gehäuses zu platzieren. In einer vorteilhaften Ausgestaltung des erfindungsgemäßen Messgerätes ist vorgesehen, den Infrarotsensor 70 in Form eines abnehmbaren IR-Sensorkopfes 73 auszugestalten und ihn als Zusatzkomponente 73 für ein entsprechendes kapazitives Hochfrequenzortungsgerät vorzusehen. Über eine entsprechende Schnittstelle am Ortungsgerät kann der Infrarotsensor dann an die Steuer- und Auswerteeinheit des Messgarätes angekoppelt und auch durch dieses angesteuert und ausgewertet werden.

In verschiedenen Ausführungsbeispielen des erfindungsgemäßen Messgerätes kann die Art der Integration der verwendeten Sensorprinzipien beliebig realisiert werden. Die Lage, Größe, sowie die Anzahl der Sensoren ist nicht beschränkt. Die aus den zusätzlichen Detektionssignalen gewonnenen Daten können gewinnbringend weiterverarbeitet werden und so zu zusätzlichen Informationen über das eingeschlossene Objekt führen.

Durch eine entsprechende Datenverarbeitung (Software) können sich die Messergebnisse der einzelnen Sensoren gegenseitig ergänzen und somit zu einem möglichst vollständigen Bild über den eingeschlossenen Gegenstand führen.

Die Auswertung mehrerer Detektionssignale, die aus einer Kombination mehrerer Sensoren oder aus einer unterschiedlichen Ansteuerung ein und desselben Sensors gewonnen werden können, ermöglicht es in vorteilhafter Weise, zusätzlich zur Ortung des eingeschlossenen Gegenstandes, beispielsweise auch eine Materialidentifikation sowie bei Elektroleitungen beispielsweise auch Informationen über den Spannungszustand der Leitungen zu gewinnen. Durch die Kombination eines kapazitiven Hochfrequenzsensors mit einem Infrarotsensor ist beispielsweise nicht nur die Ortung von Wasserleitungen möglich, sondern es kann nunmehr auf Grund der unterschiedlichen Temperaturniveaus in einer solchen Leitung auch eine Aussage beispielsweise über die Flussrichtung innerhalb der Rohre gemacht werden. Durch die Nutzung weiterer parallel bzw. seriell gewonnener Detektionssignale wird zudem die Hochfrequenzortung und deren Tiefenschätzung deutlich genauer, weil sich der entsprechende Sensor auf die identifizierte Materialart des aufgefundenen Objektes einstellen und optimieren lässt.

Es ist somit möglich, einen einzelnen Sensor auf Grund der durch die anderen Sensoren gewonnenen Informationen über den eingeschlossenen Gegenstand zu optimieren. Auf diese Weise ist es möglich, dass jede Sensoreinheit für sich genommen aufgrund der Zusatzinformationen der anderen Sensoren besser arbeitet. Diese optimierten, voneinander unabhängigen Ergebnisse können software- oder auch hardwaremäßig so zusammengefügt werden, dass das erfindungsgemäße Ortungsgerät dem Nutzer sowohl Lage, Tiefe, Breite, als auch beispielsweise Materialart und Temperatur, selbst in großen Objekttiefen mitteilen kann.

Das erfindungsgemäße Ortungsgerät bzw. das zu Grunde liegende erfindungsgemäße Verfahren zur Ortung von in einem Medium eingeschlossenen Objekten ist nicht auf die in den Figuren gezeigten Ausführungsbeispiele beschränkt.
Insbesondere ist das erfindungsgemäße Verfahren nicht beschränkt auf die Detektion von in Wänden, Böden oder Decken eingeschlossenen Objekten.

## Patentansprüche

1. Verfahren zur Ortung von in einem Medium eingeschlossenen Objekten, bei welchem mittels zumindest eines kapazitiven Hochfrequenzsensors (60) ein erstes, hochfrequentes Detektionssignal erzeugt wird, welches in das zu untersuchende Medium eingreift, so dass durch Messung und Auswertung des ersten Detektionssignals, insbesondere durch eine Impedanzmessung der kapazitiven Sensorvorrichtung (60), Informationen über ein in dem Medium eingeschlossenes Objekt gewonnen werden, **dadurch gekennzeichnet, dass** mindestens ein weiteres, zweites Detektionssignals zur Gewinnung von Informationen über das in dem Medium eingeschlossene Objekt parallel oder quasi-parallel oder seriell gemessen wird, wobei durch Kombination der aus den mindestens zwei ausgewerteten Detektionssignalen gewonnenen Informationen eine Identifikation des Objektmaterials erfolgt.

2. Verfahren nach Anspruch 1, **dadurch gekennzeichnet, dass** das mindestens eine weitere Detektionssignal von mindestens einer weiteren Sensorvorrichtung (64,65 66,68,70 92) erzeugt wird.

3. Verfahren nach einem der vorhergehenden Ansprüche, insbesondere nach Anspruch 1, **dadurch gekennzeichnet, dass** die Detektionssignale einer Mehrzahl von Sensoren gemessen und ausgewertet werden, wobei die Sensorer aus einer Gruppe stammen, die zumindest kapazitive Sensoren (60,65,66), induktive Sensoren (64), photometrische Sensoren (70,94) und Radar-Sensorer (68) umfasst.

4. Verfahren nach einem der vorhergehenden Ansprüche, **dadurch gekennzeichnet dass** mindestens ein Detektionssignal eines Sensors (64,65 66,68,70 92) durch Messung und Auswertung mindestens eines weiteren Detektionssignals optimiert wird.

5. Messgerät, insbesondere ein handgehaltenes Messgerät, zur Ortung von in einem Medium eingeschlossenen Objekten, mit zumindest einem kapazitiven Hochfrequenzsensor (60), der ein erstes, hochfrequentes Detektionssignal zum Eingriff in ein zu untersuchendes Medium erzeugt, sodass durch Messung und Auswertung des ersten Detektionssignals, insbesondere durch eine Impedanzmessung der kapazitiven Sensorvorrichtung (60), Informationen über ein in dem Medium eingeschlossenes Objekt gewonnen werden können, **dadurch gekennzeichnet, dass** mindestens ein weiterer Sensor (64,66,68,70,92) zur Erzeugung und parallelen oder quasi-parallelen oder seriellen Messung mindestens eines weiteren, zweiten Detektionssignals zur Gewinnung von Informationen über das in dem Medium eingeschlossene Objekt vorgesehen ist, wobei durch Kombination der aus den mindestens zwei ausgewerteten Detektionssignalen gewonnenen Informationen eine Identifikation des Objektmaterials erfolgt.

6. Messgerät nach Anspruch 5, **dadurch gekennzeichnet, dass** mindestens ein weiterer Sensor ein induktiver Sensor (64) ist.

7. Messgerät nach Anspruch 5, **dadurch gekennzeichnet, dass** mindestens ein weiterer Sensor ein kapazitiver Sensor (60,65,66) ist.

8. Messgerät nach Anspruch 5, **dadurch gekennzeichnet, dass** mindestens ein weiterer Sensor ein Radar-Sensor (68) ist.

9. Messgerät nach Anspruch 8, **dadurch gekennzeichnet, dass** der mindestens eine weitere Radar-Sensor (68) ein breitbandiger Impuls-Radar-Sensor ist.

10. Messgerät nach Anspruch 5, **dadurch gekennzeichnet, dass** mindestens ein weiterer Sensor ein photometrischer Sensor (92,70) ist.

11. Messgerät nach Anspruch 10, **dadurch gekennzeichnet, dass** der mindestens eine weitere photometrische Sensor ein Infrarot-Sensor (70) ist.

12. Messgerät nach einem oder mehreren der vorhergehenden Ansprüche 5 bis 11, **dadurch gekennzeichnet, dass** die mindestens zwei Sensoren (60,64,66,68,70,92) in einem gemeinsamen Gehäuse des Messgerätes (62) integriert sind.

13. Messgerät nach Anspruch 12, **dadurch gekennzeichnet, dass** die mindestens zwei der Sensoren (60,64,66,68,70,92) auf einer gemeinsamen Leiterplatte (18) angeordnet sind.

## Claims

1. Method for locating objects enclosed in a medium, in which at least one capacitive high-frequency sensor (60) is used to generate a first, high-frequency detection signal which intervenes in the medium to be examined, with the result that information relating to an object enclosed in the medium is obtained by measuring and evaluating the first detection signal, in particular by means of an impedance measurement of the capacitive sensor apparatus (60), **characterized in that** at least one further, second detection signal is measured in a parallel or quasi-parallel or serial manner in order to obtain information relating to the object enclosed in the medium, the object material being identified by combining the information obtained from the at least two evaluated detection signals.

2. Method according to Claim 1, **characterized in that** the at least one further detection signal is generated by at least one further sensor apparatus (64, 65, 66, 68, 70, 92).

3. Method according to one of the preceding claims, in particular according to Claim 1, **characterized in that** the detection signals from a plurality of sensors are measured and evaluated, the sensors coming from a group which comprises at least capacitive sensors (60, 65, 66), inductive sensors (64), photometric sensors (70, 94) and radar sensors (68).

4. Method according to one of the preceding claims, **characterized in that** at least one detection signal from a sensor (64, 65, 66, 68, 70, 92) is optimized by measuring and evaluating at least one further detection signal.

5. Measuring device, in particular a handheld measuring device, for locating objects enclosed in a medium, having at least one capacitive high-frequency sensor (60) which generates a first, high-frequency detection signal for intervening in a medium to be examined, with the result that information relating to an object enclosed in the medium can be obtained by measuring and evaluating the first detection signal, in particular by means of an impedance measurement of the capacitive sensor apparatus (60), **characterized in that** at least one further sensor (64, 66, 68, 70, 92) is provided for the purpose of generating and measuring, in a parallel or quasi-parallel or serial manner, at least one further, second detection signal for the purpose of obtaining information relating to the object enclosed in the medium, the object material being identified by combining the information obtained from the at least two evaluated detection signals.

6. Measuring device according to Claim 5, **characterized in that** at least one further sensor is an inductive sensor (64).

7. Measuring device according to Claim 5, **characterized in that** at least one further sensor is a capacitive sensor (60, 65, 66).

8. Measuring device according to Claim 5, **characterized in that** at least one further sensor is a radar sensor (68).

9. Measuring device according to Claim 8, **characterized in that** the at least one further radar sensor (68) is a broadband impulse radar sensor.

10. Measuring device according to Claim 5, **characterized in that** at least one further sensor is a photometric sensor (92, 70).

11. Measuring device according to Claim 10, **characterized in that** the at least one further photometric sensor is an infrared sensor (70).

12. Measuring device according to one or more of the preceding Claims 5 to 11, **characterized in that** the at least two sensors (60, 64, 66, 68, 70, 92) are integrated in a common housing of the measuring device (62).

13. Measuring device according to Claim 12, **characterized in that** the at least two of the sensors (60, 64, 66, 68, 70, 92) are arranged on a common printed circuit board (18).

## Revendications

1. Procédé de localisation d'objets inclus dans un milieu, selon lequel un premier signal de détection à haute fréquence est généré au moyen d'au moins un capteur à haute fréquence capacitif (60), lequel signal pénètre dans le milieu à analyser de manière à obtenir des informations à propos d'un objet inclus dans le milieu par le biais d'une mesure et d'une interprétation du premier signal de détection, notamment par une mesure de l'impédance du dispositif de détection capacitif (60), **caractérisé en ce qu'**au moins un deuxième signal de détection supplémentaire destiné à obtenir des informations à propos de l'objet inclus dans le milieu est mesuré parallèlement, quasi-parallèlement ou en série, une identification du matériau de l'objet étant effectuée par une combinaison des informations obtenues à partir des au moins deux signaux de détection interprétés.

2. Procédé selon la revendication 1, **caractérisé en ce qu'**au moins un signal de détection supplémentaire est généré par au moins un dispositif de détection supplémentaire (64, 65, 66, 68, 70, 92).

3. Procédé selon l'une des revendications précédentes, notamment selon la revendication 1, **caractérisé en ce que** les signaux de détection d'une pluralité de capteurs sont mesurés et interprétés, les capteurs étant issus d'un groupe qui comprend au moins des capteurs capacitifs (60, 65, 66), des capteurs inductifs (64), des capteurs photométriques (70, 94) et des capteurs radar (68).

4. Procédé selon l'une des revendications précédentes, **caractérisé en ce qu'**au moins un signal de détection d'un capteur (64, 65, 66, 68, 70, 92) est optimisé par mesure et interprétation d'au moins un signal de détection supplémentaire.

5. Appareil de mesure, notamment appareil de mesure portatif destiné à localiser des objets inclus dans un milieu, comprenant au moins un capteur à haute fréquence capacitif (60) qui génère un premier signal de détection à haute fréquence destiné à pénétrer dans un milieu à analyser de manière à pouvoir obtenir des informations à propos d'un objet inclus dans le milieu par le biais d'une mesure et d'une interprétation du premier signal de détection, notamment par une mesure de l'impédance du dispositif de détection capacitif (60), **caractérisé en ce qu'**il existe au moins un capteur supplémentaire (64, 66, 68, 70, 92) destiné à générer et à mesurer parallèlement, quasi-parallèlement ou en série au moins un deuxième signal de détection supplémentaire destiné à obtenir des informations à propos de l'objet inclus dans le milieu, une identification du matériau de l'objet étant effectuée par une combinaison des informations obtenues à partir des au moins deux signaux de détection interprétés.

6. Appareil de mesure selon la revendication 5, **caractérisé en ce qu'**au moins un capteur supplémentaire est un capteur inductif (64).

7. Appareil de mesure selon la revendication 5, **caractérisé en ce qu'**au moins un capteur supplémentaire est un capteur capacitif (60, 65, 66).

8. Appareil de mesure selon la revendication 5, **caractérisé en ce qu'**au moins un capteur supplémentaire est un capteur radar (68).

9. Appareil de mesure selon la revendication 8, **caractérisé en ce que** l'au moins un capteur radar (68) supplémentaire est un capteur radar à impulsions à large bande.

10. Appareil de mesure selon la revendication 5, **caractérisé en ce qu'**au moins un capteur supplémentaire est un capteur photométrique (92, 70).

11. Appareil de mesure selon la revendication 10, **caractérisé en ce que** l'au moins un capteur photométrique supplémentaire est un capteur à infrarouge (70).

12. Appareil de mesure selon une ou plusieurs des revendications précédentes 5 à 11, **caractérisé en ce que** les au moins deux capteurs (60, 64, 66, 68, 70, 92) sont intégrés dans un boîtier commun de l'appareil de mesure (62).

13. Appareil de mesure selon la revendication 12, **caractérisé en ce que** les au moins deux capteurs (60, 64, 66, 68, 70, 92) sont disposés sur un circuit imprimé (18) commun.
